Europäisches Patentamt

European Patent Office

Office européen des brevets

(11) Veröffentlichungsnummer: **0 341 521**
**A1**

(12) **EUROPÄISCHE PATENTANMELDUNG**

(21) Anmeldenummer: **89107821.4**

(22) Anmeldetag: **28.04.89**

(51) Int. Cl.⁴: **G11B 11/10**

(30) Priorität: **09.05.88 DE 3815848**

(43) Veröffentlichungstag der Anmeldung:
**15.11.89 Patentblatt 89/46**

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Reim, Wolfgang, Dr.**
**Lange Zeile 96**
**D-8520 Erlangen(DE)**
Erfinder: **Weller, Dieter, Dr.**
**Webichgasse 15**
**D-8520 Erlangen(DE)**

(54) **Magnetooptisches Speichermedium.**

(57) Das Speichermedium enthält mehrere Schichten mit verschiedenen magnetischen Eigenschaften. Erfindungsgemäß ist ein Mehrschichtsystem mit wenigstens einer Magnetschicht (2 bis 5) aus magnetooptischem Speichermaterial und wenigstens einer Reflektorschicht (6 bis 8) mit einem Brechungsindex $n < 1$ vorgesehen, die mindestens so dick ist wie eine der Magnetschichten (2 bis 5). Die maximale Dicke $d_1$ einer der Magnetschichten (2 bis 5) ist umgekehrt proportional ihrem Absorptionskoeffizienten K. In dieser Ausführungsform eines magnetooptischen Mehrschichtsystems erhält man einen großen Kerr-Winkel $\theta_K$.

FIG 2

## Magnetooptisches Speichermedium

Die Erfindung bezieht sich auf ein magnetooptisches Speichermedium aus mehreren Schichten mit verschiedenen magnetischen Eigenschaften.

Es sind magnetooptische Speichermedien bekannt, die aus einer amorphen magnetischen Legierung oder einer polykristallinen Legierung mit sehr kleinen Kristallitgrößen bestehen. Diese Speichermedien enthalten im allgemeinen Elemente der Seltenen Erden sowie wenigstens ein Übergangsmetall. Die Speicherung der Information beruht auf einer thermischen Veränderung der magnetischen Struktur des Speichermaterials, das im allgemeinen als dünne Aufzeichnungsschicht im Vakuum auf einen Träger aufgebracht wird. Die Aufzeichnung erfolgt mittels eines Strahls hoher Energiedichte, vorzugsweise eines Laserstrahls, der auf die Oberfläche der Speicherschicht fokussiert wird. Durch die Strahlungsenergie wird die Speicherschicht im in wesentlichen punktförmigen Bereichen bis zu einer über der Curie-Temperatur $T_C$ oder der magnetischen Kompensationstemperatur liegenden Temperatur erwärmt und dadurch ein Muster von magnetischen Bereichen mit umgekehrter Polarität gebildet. Die gespeicherten Informationen lassen sich dann dadurch auslesen, daß die Polarisationsebene eines Laserstrahls mit geringerer Energie beim Durchtritt durch die Speicherschicht (Faraday-Effekt) oder bei der Reflexion an der Speicherschicht (Kerr-Effekt) gedreht und dieser Drehwinkel $\theta_K$ gemessen wird. Das Signal-Rauschverhältnis oder das Träger-Rauschverhältnis C/N (carrier to noise ratio) ist annähernd proportional dem Produkt aus $\theta_K \cdot \sqrt{R}$, in dem $\theta_K$ der Kerr-Winkel und R der Reflexionsfaktor ist. Mit einer Vergrößerung des Kerr-Winkels $\theta_K$ erhält man somit auch ein entsprechend verbessertes Träger-Rauschverhältnis und eine erhöhte Auslesegeschwindigkeit. Außer einem großen Kerr-Winkel und einem guten Signal-Rauschverhältnis soll das Speichermaterial auch noch eine hohe Koerzitivfeldstärke, d.h. eine annähernd rechteckige Magnetisierungsschleife, haben.

Der Erfindung liegt die Aufgabe zugrunde, ein magnetooptisches Speichermedium mit einem großen Kerr-Winkel und hoher Koerzitivfeldstärke anzugeben, das eine große Datendichte und eine hohe Aufzeichnungs- und Auslesegeschwindigkeit ermöglicht.

Es ist auch ein magnetooptisches Medium bekannt, das aus einem Mehrschicht-System besteht, das zwei verschiedene Materialien, nämlich ein ferromagnetisches Material, beispielsweise Kobalt, und ein nichtmagnetisches Material, beispielsweise Kupfer, enthält, die als Schichten mit verschiedener Dicke jeweils abwechselnd nacheinander auf ein Substrat aufgebracht sind. Durch Änderung der Schichtdicke kann die Wellenlänge maximalen Kerr-Winkels $\theta_K$ verschoben werden. Der Kerr-Winkel $\theta_K$ ist jedoch in diesem Mehrschicht-System, das auch als künstliches Supergitter bezeichnet wird, immer kleiner als in einer einzelnen Schicht aus dem gleichen ferromagnetischem Material (Journal of the Physical Society of Japan, Vol. 55, No. 8, Aug. 1986, S. 2539 bis 2542).

Die genannte Aufgabe wird nun erfindungsgemäß gelöst mit den kennzeichnenden Merkmalen des Anspruchs 1. Die Magnetschichten bestehen aus einem Speichermaterial mit großer Koerzitivfeldstärke $H_C$ von vorzugsweise wenigstens 1 kG, insbesondere mindestens 2 kG und ausreichendem Kerr-Winkel $\theta_K$, der im allgemeinen wenigstens $0,2^\circ$, vorzugsweise wenigstens $0,4^\circ$, beträgt. Mit diesem Mehrschichtsystem erhält man einen wesentlich erhöhten Kerr-Winkel $\theta_K$.

Die Gesamtdicke D dieses Mehrschichtsystems wird vorzugsweise wenigstens 3/K betragen, wobei K der Absorptionskoeffizient ist. Die Magnetschichten können beispielsweise aus Terbium-Eisen-Kobalt TbFeCo oder auch aus Ytterbium-Terbium-Eisen-Kobalt YbTbFeCo bestehen. Ferner ist beispielsweise Gadolinium-Terbium-Eisen-Kobalt GdTbFeCo geeignet.

Die Reflektorschichten können beispielsweise aus Kupfer Cu oder Gold Au, vorzugsweise aus Silber Ag, bestehen. Ferner geeignet sind beispielsweise Reflektorschichten aus Thulium-Sulfid TmS sowie aus sogenanntem "künstlichem Gold", beispielsweise Titannitrid TiN oder Zirkonnitrid ZrN sowie Hafniumnitrid HfN.

Zur weiteren Erläuterung der Erfindung wird auf die Zeichnung Bezug genommen, in deren Figur 1 ein Ausführungsbeispiel eines magnetooptischen Speichermediums aus einem Mehrschicht-System gemäß der Erfindung schematisch veranschaulicht ist. In Figur 2 ist eine bevorzugte Ausführungsform des Mehrschicht-Systems dargestellt. Die Abhängigkeit des maximalen Kerr-Winkels $\theta_K$ von der Photonenenergie E ist in Figur 3 in einem Diagramm veranschaulicht.

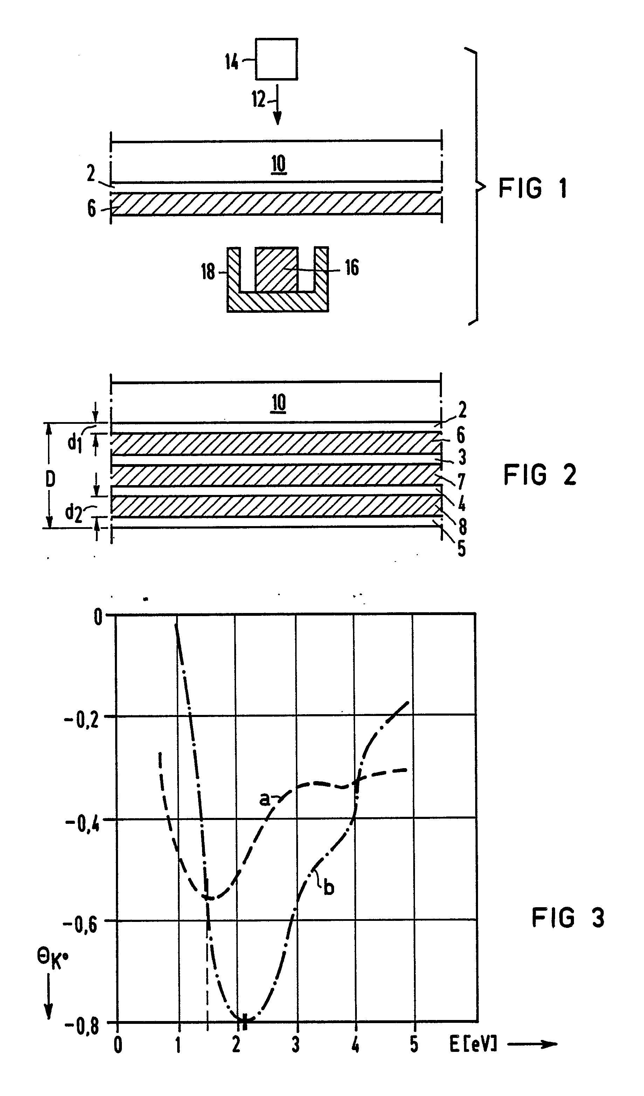

Gemäß Figur 1 besteht ein Speichermedium aus einem Mehrschichtsystem mit einer Magnetschicht 2 aus magnetischem Speichermaterial, beispielsweise aus Terbium-Eisen-Kobalt TbFeCo, die auf einem transparenten Substrat 10 abgeschieden, beispielsweise aufgesputtert oder aufgedampft ist. Unter der Magnetschicht 2 ist eine Reflektorschicht 6 mit einem Brechungsindex n < 1 angeordnet, die beispielsweise aus Silber Ag bestehen kann und deren Dicke vorzugsweise wenigstens das Doppelte der Dicke der Magnetschicht 2 beträgt. Mit einem Laserstrahl 12, der von einer Strahlungsquelle 14 vorgegeben ist, kann eine Information in das Mehrschichtsystem eingeschrieben und auch wieder ausgelesen werden. Zum Einschreiben kann beispielsweise ein zylindrischer Magnet 16 vorgesehen sein, der mit einem rotationssymmetrischen Joch 18 versehen ist. Mit diesem Mehrschichtsystem erhält man einen wesentlich erhöhten Kerrwinkel $\theta_K$.

In einer besonders vorteilhaften Ausführungsform gemäß Figur 2 enthält ein Mehrschicht-System mehrere Magnetschichten 2 bis 5, zwischen denen jeweils eine Reflektorschicht 6 bis 8 angeordnet ist. Mit Magnetschichten 2 bis 5 mit einer Dicke von etwa 2 bis 20 nm, vorzugsweise etwa 5 bis 12 nm, und Reflektorschichten 6 bis 8 mit einer Dicke $d_2$ von beispielsweise etwa 5 bis 60 nm, vorzugsweise etwa 10 bis 40 nm, erhält man bei einer Wellenlänge des Laserstrahls 12 von beispielsweise 633 nm einen Kerr-Winkel $\theta_K$, der durch das Material und die Dicke der Schichten bestimmt wird und wesentlich mehr als 1° betragen kann. Die Gesamtdicke D des Mehrschichtsystems wird vorzugsweise wenigstens 3/K betragen, wobei K der effektive Absorptionskoeffizient des gesamten Mehrschichtsystems ist.

In Figur 3 ist der Kerr-Winkel $\theta_K$ über der Photonenenergie E in Elektronenvolt eV in einem Diagramm aufgetragen. Mit einer einzelnen Schicht aus Eisen-Kobalt FeCo würde man gemäß der gestrichelten Kurve a bei einer Photonenenergie von etwa 1,5 eV einen maximalen Kerr-Winkel von etwa 0,55° erhalten, was einer Wellenlänge von etwa 800 nm entspricht. Dagegen erhöht sich in einem Mehrschichtsystem gemäß Figur 2 mit Magnetschichten 2 bis 5 aus Eisen-Kobalt FeCo mit einer Dicke $d_1$ von jeweils etwa 8 bis 10 nm und Reflektorschichten 6 bis 8 aus Silber Ag mit einer Dicke $d_2$ von jeweils etwa 15 bis 25 nm bei nichtverminderter Reflektivität R = 0,64 der maximale Kerr-Winkel $\theta_K$ auf etwa 0,8° bei einer Photonenenergie von etwa 2,1 eV, was einer Wellenlänge von etwa 590 nm entspricht.

## Ansprüche

1. Magnetooptisches Speichermedium aus mehreren Schichten mit verschiedenen magnetischen Eigenschaften, **dadurch gekennzeichnet,** daß ein Mehrschichtsystem vorgesehen ist, das mindestens eine Magnetschicht (2) aus magnetischem Speichermaterial und mindestens eine Reflektorschicht (6) mit einem Brechungsindex n < 1 enthält, deren Dicke $d_2$ mindestens so groß ist wie die Dicke $d_1$ der Magnetschicht (2) und daß die maximale Dicke $d_1$ der Magnetschicht (2) umgekehrt proportional ist seinem Absorptionskoeffizienten K.

2. Speichermedium nach Anspruch 1, **gekennzeichnet** durch mehrere Magnetschichten (2 bis 5), zwischen denen jeweils eine Reflektorschicht (6 bis 8) angeordnet ist.

3. Speichermedium nach Anspruch 1 oder 2, **dadurch gekennzeichnet, daß** die Dicke $d_2$ der Reflektorschichten (6 bis 8) wenigstens das Doppelte der Dicke $d_1$ der Magnetschichten (2 bis 5) beträgt.

4. Speichermedium nach einem der Ansprüche 1 bis 2, **dadurch gekennzeichnet, daß** ein Mehrschichtsystem mit einer Gesamtdicke D ≧ 3/K vorgesehen ist, wobei K der effektive Absorptionskoeffizient des Mehrschichtsystems ist.

5. Speichermedium nach einem der Ansprüche 1 bis 4, **dadurch gekennzeichnet, daß** die Magnetschichten (2 bis 5) aus Terbium-Eisen-Kobalt TbFeCo bestehen.

6. Speichermedium nach einem der Ansprüche 1 bis 4, **dadurch gekennzeichnet, daß** die Magnetschichten (2 bis 5) aus Ytterbium-Terbium-Eisen-Kobalt YbTbFeCo bestehen.

7. Speichermedium nach einem der Ansprüche 1 bis 4, **dadurch gekennzeichnet, daß** die Magnetschichten (2 bis 5) aus Gadolinium-Terbium-Eisen-Kobalt GdTbFeCo bestehen.

8. Speichermedium nach einem der Ansprüche 1 bis 7, **gekennzeichnet** durch wenigstens eine Reflektorschicht (6 bis 8) aus Silber Ag.

9. Speichermedium nach einem der Ansprüche 1 bis 7, **gekennzeichnet** durch wenigstens eine Reflektorschicht (6 bis 8) aus Thulium-Sulfid TmS.

10. Speichermedium nach einem der Ansprüche 1 bis 7, **gekennzeichnet** durch wenigstens eine Reflektorschicht (6 bis 8) aus Titannitrid TiN.

11. Speichermedium nach einem der Ansprüche 1 bis 7, **gekennzeichnet** durch wenigstens eine Reflektorschicht (6 bis 8) aus Zirkonnitrid ZrN.

12. Speichermedium nach einem der Ansprüche 1 bis 7, **gekennzeichnet** durch wenigstens eine Reflektorschicht (6 bis 8) aus Hafniumnitrid HfN.

13. Speichermedium nach Anspruch 7, **gekennzeichnet** durch wenigstens eine Reflektorschicht (6 bis 8) aus Gold Au.

14. Speichermedium nach einem der Ansprüche 1 bis 7, **gekennzeichnet** durch wenigstens eine Reflektorschicht (6 bis 8) aus Kupfer Cu.

EP 0 341 521 A1

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN<br>vol. 10, no. 215 (P-481)(2271) 26 Juli 1986,<br>& JP-A-61 054059 (HITACHI LTD) 18 März 1986,<br>* siehe das ganze Dokument *<br>--- | 1, 2 | G11B11/10 |
| A | PATENT ABSTRACTS OF JAPAN<br>vol. 10, no. 188 (P-473)(2244) 03 Juli 1986,<br>& JP-A-61 032242 (CANON INC.) 14 Februar 1986,<br>* siehe das ganze Dokument *<br>--- | 1, 2 | |
| A | PATENT ABSTRACTS OF JAPAN<br>vol. 10, no. 132 (P-456)(2189) 16 Juni 1986,<br>& JP-A-60 254433 (CANON K.K.) 16 Dezember 1985,<br>* siehe das ganze Dokument *<br>--- | 1-3,<br>5-8, 13,<br>14 | |
| A | PATENT ABSTRACTS OF JAPAN<br>vol. 12, no. 79 (P-676)(2926) 12 März 1988,<br>& JP-A-62 217445 (SEIKO INSTRUMENTS AND<br>ELECTRONICS, LTD.) 24 September 1987,<br>* siehe das ganze Dokument *<br>--- | 7 | |
| A | DE-A-3623285 (HITACHI LTD)<br>* das ganze Dokument *<br>* besonders Zusammenfassung; Tabelle 1 *<br>--- | .<br>.<br>7 | **RECHERCHIERTE SACHGEBIETE (Int. Cl.4)**<br><br>G11B |
| A | EP-A-086009 (N.V. PHILIPS GLOEILAMPENFABRIEKEN.)<br>* Zusammenfassung; Ansprüche 1, 2 *<br>------ | 10-12 | |

Der vorliegende Recherchenbericht wurde für alle Patentansprüche erstellt

| Recherchenort | Abschlußdatum der Recherche | Prüfer |
|---|---|---|
| DEN HAAG | 08 AUGUST 1989 | BENFIELD A.D. |